# EUROPEAN PATENT APPLICATION

(11) **EP 3 514 636 A1**
(43) Date of publication of application: **24.07.2019**
(21) Application number: 18178771.4
(22) Date of filing: 20.06.2018
(51) Int. Cl.: G04G 21/08

(54) **FUNCTION SELECTION DEVICE AND OPERATING METHOD THEREOF**

(30) Priority: 19.01.2018 TW 107102079
(71) Applicant: Princo Corp., Hsinchu 300 (TW)
(72) Inventor: CHIU, Pei-liang, 300 Hsinchu (TW)
(74) Representative: Keil & Schaafhausen Patent- und Rechtsanwälte PartGmbB

(57) **Abstract**

A function selection device and an operating method thereof are disclosed. The function selection device includes a function selection interface including a plurality of function icons, a display module, and a functional module. The display module includes a dial, physical scales, and at least one indicator. The functional module includes a touch detection unit configured to sense a signal change via an electrically conductive layer; and a processor configured to output, according to the signal change, a corresponding command to perform a function corresponding to one of the function icons.

## Description

### TECHNICAL FIELD OF THE INVENTION

### TECHNICAL FIELD OF THE INVENTION

The present disclosure relates to an information indicating field, and more particularly to a function selection device and an operating method thereof.

### BACKGROUND OF THE INVENTION

Currently, a wearable device which is manufactured as an input device that can communicate with an external device (e.g., a mobile phone) is developed. For example, it is increasingly common to manufacture a smart wristwatch by disposing a wireless antenna and a functional module in a wristwatch.

Furthermore, a conventional wristwatch does not include a touch screen and does not have an electronic knob (a button). Even if the conventional wristwatch is attached with various communicating and operating modules or sensors, the conventional wristwatch only can display time via time display elements (e.g., physical hands including an hour hand, a minute hand, and a second hand). The conventional wristwatch does not display any other information (e.g., a sensing result of a sensor) or does not display various functions to be performed by a user.

Consequently, there is a need to solve the above-mentioned problems in the prior art.

### SUMMARY OF THE INVENTION

An objective of the present disclosure is to provide a function selection device and an operating method thereof capable of solving the problems in the prior art.

The function selection device of the present disclosure includes a top cover; a function selection interface disposed on a lower surface of the top cover and including a plurality of function icons and an electrically conductive layer, wherein the electrically conductive layer includes a plurality of electrically conductive materials which are disconnected from each other, and the electrically conductive materials are formed on upper surfaces of the function icons or lower surfaces of the function icons; a housing; a bottom cover, the top cover, the housing, and the bottom cover constructing an accommodating space from top to bottom; a display module disposed in the accommodating space, the display module including a dial, physical scales disposed on the dial, and at least one indicator disposed on the physical scales; and a functional module disposed in the accommodating space, the functional module a touch detection unit configured to sense a signal change via the electrically conductive layer of the function selection interface, wherein the signal change is generated by the action performed on or above the top cover, and a position of the action corresponds to one of the function icons; and a processor configured to output, according to the signal change, a corresponding command to perform a function corresponding to the one of the function icons.

The function selection device of the present disclosure includes a top cover; a function selection interface disposed to surround an outer edge of the top cover and including a plurality of function icons, a dielectric material layer, and an electrically conductive layer, wherein the function icons are formed on an upper surface of the dielectric material layer, and the electrically conductive layer is formed on a lower surface of the dielectric material layer; a housing; a bottom cover, the top cover, the housing, and the bottom cover constructing an accommodating space from top to bottom; a display module disposed in the accommodating space, the display module including a dial, physical scales disposed on the dial, and at least one indicator disposed on the physical scales; and a functional module disposed in the accommodating space, the functional module including a touch detection unit configured to sense a signal change via the electrically conductive layer of the function selection interface, wherein the signal change is generated by the action performed on or above the function selection interface, and a position of the action corresponds to one of the function icons; and a processor configured to output, according to the signal change, a corresponding command to perform a function corresponding to the one of the function icons.

In the operating method of the function selection device of the present disclosure, the function selection device includes a top cover, a function selection interface, a housing, a bottom cover, a display module, and a functional module. The function selection interface is disposed on a lower surface of the top cover and includes a plurality of function icons and an electrically conductive layer. The electrically conductive layer includes a plurality of electrically conductive materials which are disconnected from each other. The electrically conductive materials are formed on upper surfaces of the function icons or lower surfaces of the function icons. The top cover, the housing, and the bottom cover construct an accommodating space from top to bottom. The display module is disposed in the accommodating space and includes a dial, physical scales disposed on the dial, and at least one indicator disposed on the physical scales. The functional module is disposed in the accommodating space and includes a touch detection unit and a processor. The operating method of the function selection device includes sensing a signal change by the touch detection unit via the electrically conductive layer included in the function selection interface, wherein the signal change is generated by an action performed on or above the top cover, and a position of the action corresponds to one of the function icons; and outputting, according to the signal change, a corresponding command to perform a function corresponding to the one of the function icons by the processor.

In the operating method of the function selection device of the present disclosure, the function selection device includes a top cover, a function selection interface, a housing, a bottom cover, a display module, and a functional module. The function selection interface is disposed to surround an outer edge of the top cover and includes a plurality of function icons, a dielectric material layer, and an electrically conductive layer. The function icons are formed on an upper surface of the dielectric material layer. The electrically conductive layer is formed on a lower surface of the dielectric material layer. The top cover, the housing, and the bottom cover construct an accommodating space from top to bottom. The display module is disposed in the accommodating space and includes a dial, physical scales disposed on the dial, and at least one indicator disposed on the physical scales. The functional module is disposed in the accommodating space and includes a touch detection unit and a processor. The operating method of the function selection device includes sensing a signal change by the touch detection unit via the electrically conductive layer included in the function selection interface, wherein the signal change is generated by an action performed on or above the function selection interface, and a position of the action corresponds to one of the function icons; and outputting, according to the signal change, a corresponding command to perform a function corresponding to the one of the function icons by the processor.

In the function selection device and the operating method thereof, since various functions are provided for a user to select and switch, the function selection device can display other information besides a time and perform various function.

### BRIEF DESCRIPTION OF THE DRAWINGS

FIG. 1 shows a top view of a function selection device in accordance with an embodiment of the present disclosure.
FIG. 2 shows an exploded view of the function selection device shown in FIG. 1.
FIG. 3 shows a sectional view of the function selection device shown in FIG. 1.
FIG. 4 shows a wireless communication between a wireless antenna electrically connected to the controlling unit and a mobile terminal in accordance with the present disclosure.
FIG. 5 shows that the function selection interface is formed on the lower surface of the top cover in accordance with an embodiment of the present disclosure.
FIG. 6 shows the function selection interface.
FIG. 7 shows that a function selection interface is formed to surround an outer edge of the top cover in accordance with another embodiment of the present disclosure.
FIG. 8 shows a flowchart of an operating method of a function selection device in accordance with an embodiment of the present disclosure.
FIG. 9 shows a flowchart of an operating method of a function selection device in accordance with another embodiment of the present disclosure.

### DETAILED DESCRIPTION OF THE INVENTION

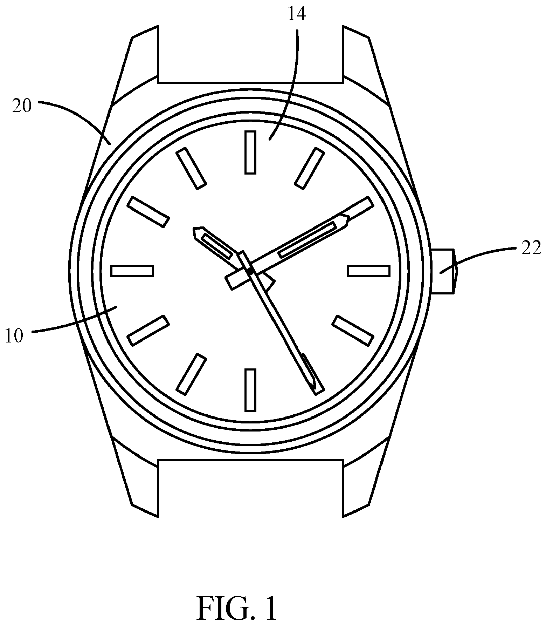

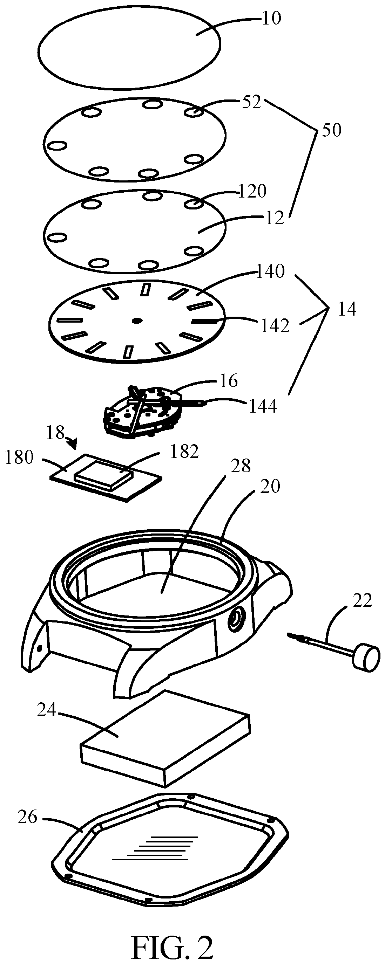

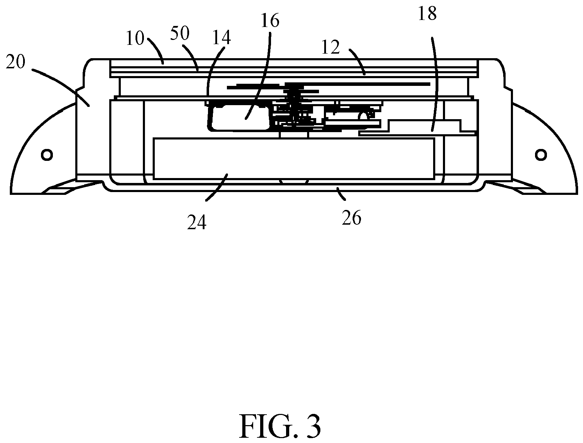

The present disclosure is a function selection device including a short distance communication module disposed therein. The function selection device may be but not limited to a wristwatch. Please refer to FIG. 1 to FIG. 3. FIG. 1 shows a top view of a function selection device in accordance with an embodiment of the present disclosure. FIG. 2 shows an exploded view of the function selection device shown in FIG. 1. FIG. 3 shows a sectional view of the function selection device shown in FIG. 1.

The function selection device includes a top cover 10, a function selection interface 50 (including an electrically conductive layer 12 and a plurality of function icons 52), a display module 14, a movement 16, a functional module 18, a housing 20, a crown 22, a battery 24, and a bottom cover 26.

A feature of the present disclosure is that the function selection interface 50 is disposed on and adhered to a lower surface of the top cover 10 and includes the function icons 52 which are printed on or adhered to the lower surface of the top cover 10.

The top cover 10, the housing 20, and the bottom cover 26 construct an accommodating space 28 from top to bottom. The top cover 10, the housing 20, and the bottom cover 26 are configured to protect mechanical structures and/or electronic devices inside the command device.

The top cover 10 is a transparent material (e.g., a glass). The electrically conductive layer 12 includes a plurality of electrically conductive materials 120 which are disconnected from each other (electrically disconnected from each other). The function icons 52 are disposed or formed on the lower surface of the top cover 10. The electrically conductive materials 120 which are disconnected from each other (electrically disconnected from each other) are adhered to or formed on lower surfaces of the function icons 52 one-on-one. That is, each of the electrically conductive materials 120 which are disconnected from each other (electrically disconnected from each other) is adhered to or formed on the lower surface of one of the function icons 52.

In another embodiment, the electrically conductive materials 120 which are disconnected from each other (electrically disconnected from each other) may be formed between the top cover 10 and the function icons 52. Accordingly, the electrically conductive materials 120 which are disconnected from each other (electrically disconnected from each other) are transparent conductive films. The function icons 52 only have an indicating function without a sensing function. The electrically conductive layer 12 (the electrically conductive materials 120) have a sensing function. Therefore, the function icons 52 and the electrically conductive layer 12 together form the function selection interface 50.

In a combination of the top cover 10 and the function selection interface 50, only the function selection interface 50 has an image display function (to display the static function icons 52). An operation principle of the function selection device of the present disclosure is different from that of a liquid crystal display device or a touch display device.

In the present embodiment, the display module 14 is disposed in the accommodating space 28 and positioned on the functional module 18. The display module 14 includes a dial 140, physical scales 142 (e.g., one o'clock to twelve o'clock) disposed on the dial 140, and at least one indicator 144 (e.g., physical hands including an hour hand, a minute hand, and a second hand) disposed on the physical scales 142. The at least one indicator 144 is driven by the movement 16 and cooperates with the physical scales 142 of the display module 14 to show the time.

It is noted that in the present embodiment, the function selection device is a watch including the at least one indicator 144. The at least one indicator 144 and the movement 16 are driven by at least one motor. When the at least one indicator 144 includes an hour hand, a minute hand, and a second hand, the hour hand, the minute hand, and the second hand may be driven by respective motors or a single motor.

The crown 22 is disposed at the lateral side of the function selection device. A user can adjust the correct time or set an alarm by turning a knob on the crown 22.

The battery 24 can provide the power required by the movement 16 and/or the functional module 18. The battery 24 may be a primary battery or a secondary battery.

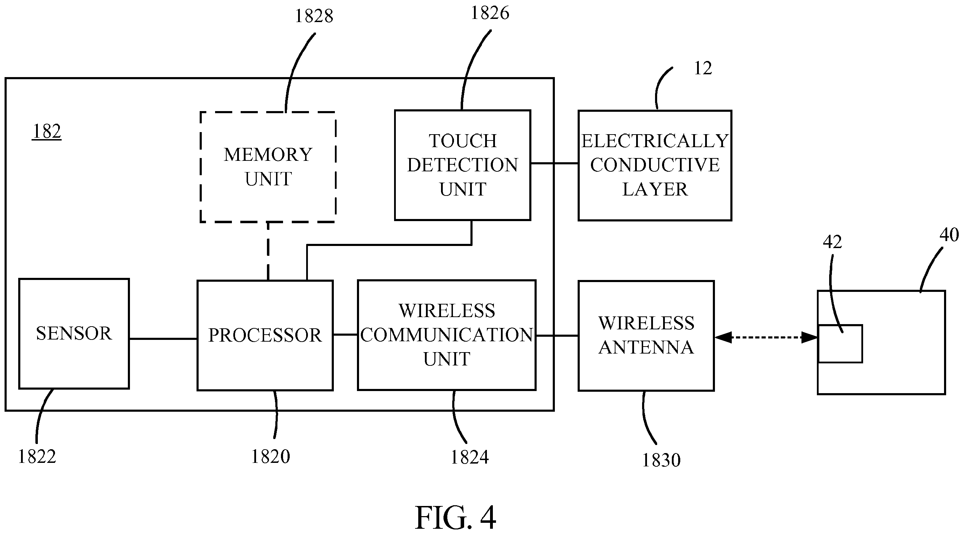

The functional module 18 is disposed in the accommodating space 28. As shown in FIG. 2, the functional module 18 includes an electrical connection substrate 180 and a controlling unit 182 disposed on the electrical connection substrate 180. Please refer to FIG. 4. FIG. 4 shows a wireless communication between a wireless antenna electrically connected to the controlling unit 182 and a mobile terminal 40 in accordance with the present disclosure. The controlling unit 182 of the present disclosure includes a processor 1820, at least one sensor 1822, a wireless communication unit 1824, and a touch detection unit 1826.

The wireless communication unit 1824 is electrically connected to the processor 1820 and configured to wirelessly communicate with the mobile terminal 40 via the wireless antenna 1830. The mobile terminal 40 has a wireless signal transceiver 42 for receiving and transmitting wireless signals. For example, the wireless signal transceiver 42 may be a BLUETOOTH transceiver or a near field communication (NFC) transceiver. It is noted that when the function selection device has a wristwatch structure, the functional module 18 can also be deployed on a watch strap of the wristwatch structure.

The at least one sensor 1822 is electrically connected to the processor 1820 and configured to sense a gesture performed on the function selection device. The gesture, for example, may be but not limited to a click action, a sliding action, or a vibration action.

The functional module 18 may also include a memory unit 1828. The memory unit 1828 is configured to store the data required by the processor 1820. Also, the memory unit 1828 can be integrated into the processor 1820.

The touch detection unit 1826 is electrically connected to the electrically conductive layer 12 and the processor 1820. When the user performs an action on or above the top cover 10 in FIG. 2 (e.g., clicks the top cover 10 or slides on the top cover 10) and a position of the action corresponds to one of the function icons 52, the touch detection unit 1826 is configured to sense a signal change (e.g., a current change resulted from the click of the user) via the electrically conductive layer 12 (electrically conductive materials 120). The signal change is generated by the action performed on or above the top cover 10. The processor 1820 is configured to receive the signal change and to output, according to the signal change, a corresponding command to perform a function corresponding to one of the function icons 52.

In an optional embodiment, when the processor 1820 receives the signal change, the processor 1820 controls the at least one indicator 144 to point to the one of the function icons 52 for the user to confirm first. Then, after the user confirms the one of the function icons 52, the processor 1820 outputs the corresponding command to perform the function corresponding to the one of the function icons 52. That is, before the processor 1820 outputs the corresponding command to perform the function corresponding to the one of the function icons 52, the at least one indicator 144 is controlled to point to the one of the function icons 52 by the processor 1820.

Alternatively, the at least one sensor 1822 is configured to sense an action or a gesture performed on the indicating device (e.g., the user clicks the top cover 10 or slides on the top cover 10). The processor 1820 is configured to output, according to the action or the gesture, a corresponding command to control the at least one indicator 30 to perform a function corresponding to the one of the function icons 52.

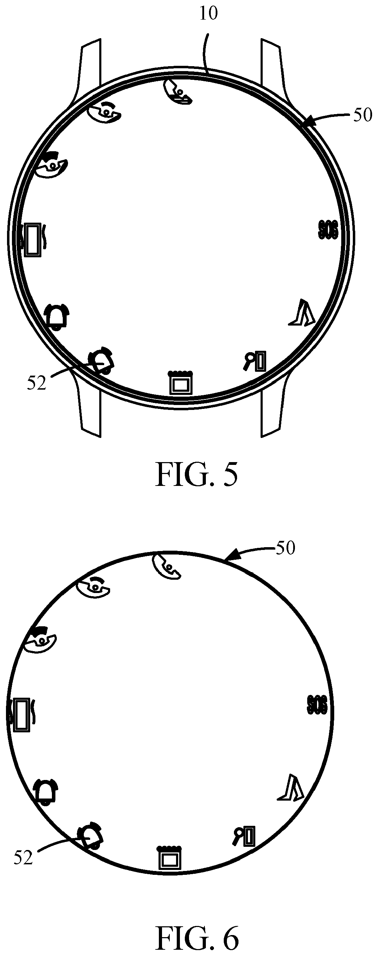

Please refer to FIG. 5 and FIG. 6. FIG. 5 shows that the function selection interface 50 is formed on the lower surface of the top cover 10 in accordance with an embodiment of the present disclosure. FIG. 6 shows the function selection interface 50.

As mentioned above, a feature of the present disclosure is that the function selection interface 50 is disposed on and adhered to the lower surface of the top cover 10. In detail, positions of the function icons 52 correspond to an edge area of the lower surface of the top cover 10. Therefore, the user can select various functions via the function icons, so that the processor 1820 performs the functions corresponding to the function icons 52. For example, the processor 1820 wirelessly communicates with mobile terminal 40 via the wireless communication unit 1824 and the wireless antenna 1830.

Furthermore, it is noted that the function icons 52 included in the function selection interface 50 only have a display function, so that the user selects one of the function icons 52. A function of sensing the signal change (e.g., a current change resulted from the click of the user) is performed by the electrically conductive layer 12 included in the function selection interface 50.

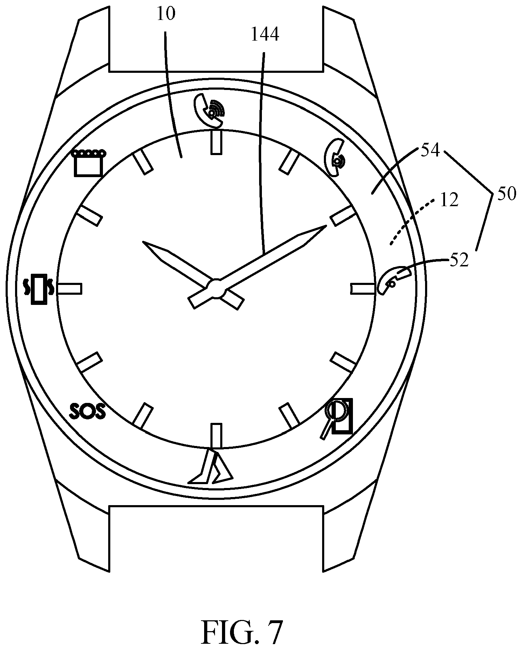

Please refer to FIG. 7. FIG. 7 shows that a function selection interface 50 is formed to surround an outer edge of the top cover 10 in accordance with another embodiment of the present disclosure. In the present embodiment, the function selection interface 50 is disposed to surround the outer edge of the top cover 10 and includes a plurality of function icons 52. The function selection interface 50 further includes a dielectric material layer 54 and an electrically conductive layer 12. In the present embodiment, the dielectric material layer 54 is formed as an annular ring. However, the present disclosure is not limited thereto. The function icons 52 are formed on an upper surface of the dielectric material layer 54. Each of the electrically conductive materials 120 in FIG. 2 (i.e., the electrically conductive layer 12) which are disconnected from each other (electrically disconnected from each other) is formed at a position on a lower surface of the dielectric material layer 54 and corresponding to one of the function icons 52. The electrically conductive materials 120 are configured to sense an action performed on or above the function icons 52. The function selection interface 50 and the top cover 10 are independent elements from each other. In detail, the function selection interface 50 surrounds the top cover 10. The function selection interface 50 is disposed at a position where a bezel of a conventional wristwatch is disposed. That is, the function selection interface 50 is used to replace the bezel of the conventional wristwatch.

In FIG. 7, the function selection interface 50 disposed at the position of the bezel of the conventional wristwatch has a touch function. The function selection interface 50 is electrically connected to the touch detection unit 1826 via the electrically conductive layer 12 (electrically conductive materials 120) corresponding to the function icons 52. In the present embodiment, the touch detection unit 1826 directly senses a touch on or above the function selection interface 50. That is, when the user performs an action on or above the function selection interface 50 (e.g., clicks the function selection interface 50 or slides on the function selection interface 50), the touch detection unit 1826 is configured to sense a signal change (e.g., a current change resulted from the click of the user) via the electrically conductive layer 12 (electrically conductive materials 120). The signal change is generated by the action performed on or above the function selection interface 50. The processor 1820 is configured to receive the signal change and to output, according to the signal change, a corresponding command to perform a function corresponding to one of the function icons 52.

In an optional embodiment, when the processor 1820 receives the signal change, the processor 1820 controls the at least one indicator 144 to point to the one of the function icons 52 for the user to confirm first. Then, after the user confirms the one of the function icons 52, the processor 1820 outputs the corresponding command to perform the function corresponding to the one of the function icons 52. That is, the signal change is not sensed by the top cover 10 in the present embodiment. The signal change is independent from the top cover 10. Before the processor 1820 outputs the corresponding command to perform the function corresponding to the one of the function icons 52, the at least one indicator 144 is controlled to point to the one of the function icons 52 by the processor 1820.

In the function selection device of the present disclosure, when the processor 1820 controls the function selection device to enter a function mode (e.g., trigger a function mode by using the function icons 52) instead of a time mode after receiving a command from the user, the user can click (or touch) to select one of the function icons 52. The touch detection unit 1826 senses the signal change via the electrically conductive layer 12, or the touch detection unit 1826 directly senses the touch or the click action. Then, the processor 1820 can perform the function corresponding to the clicked (touched) function icon 52.

The above-mentioned function icons 52 correspond to various functions. For example, one function corresponding to one of the function icons is that the at least one indicator 144 can be switched from a mode for displaying a local time to a mode for displaying times of two places (including a local time and a hometown time). That is, when the user selects a corresponding one of the function icon 52, the at least one indicator 144 can be switched from the mode for displaying the local time to the mode for displaying the times of the two places (including the local time and the hometown time).

In another embodiment, one function corresponding to one of the function icons is that the at least one indicator 144 can be switched from a mode for displaying a time to a timer mode, so that the at least one indicator 144 starts to function as a timer after a command is received.

In yet another embodiment, one function corresponding to one of the function icons is that the at least one indicator 144 can be switched from a mode for displaying a time to a mode for indicating at least one of a date and which day in a week. The at least one indicator 144 includes an hour hand, a minute hand, and a second hand. After the at least one indicator 144 is switched from the mode for displaying a time to the mode for indicating at least one of a date and which day in a week, the hour hand indicates a tens digit of a date, the minute hand indicates a units digit of the date, and the second hand indicates which day in a week.

In yet another embodiment, one function corresponding to one of the function icons is that the processor 1820 controls a mobile phone (an external device, e.g., the mobile terminal 40 in FIG. 4) to dial a phone or answer a phone via the wireless communication unit 1824.

In yet another embodiment, one function corresponding to one of the function icons is that the processor 1820 controls, via the wireless communication unit 1824, a mobile phone (an external device, e.g., the mobile terminal 40 in FIG. 4) to perform a function of sending an emergency notification or a function of sending a positioning request.

In yet another embodiment, one function corresponding to one of the function icons is that the processor 1820 performs a function for correcting a time.

In yet another embodiment, one function corresponding to one of the function icons is that the processor 1820 performs a function for comparing a current time with another time.

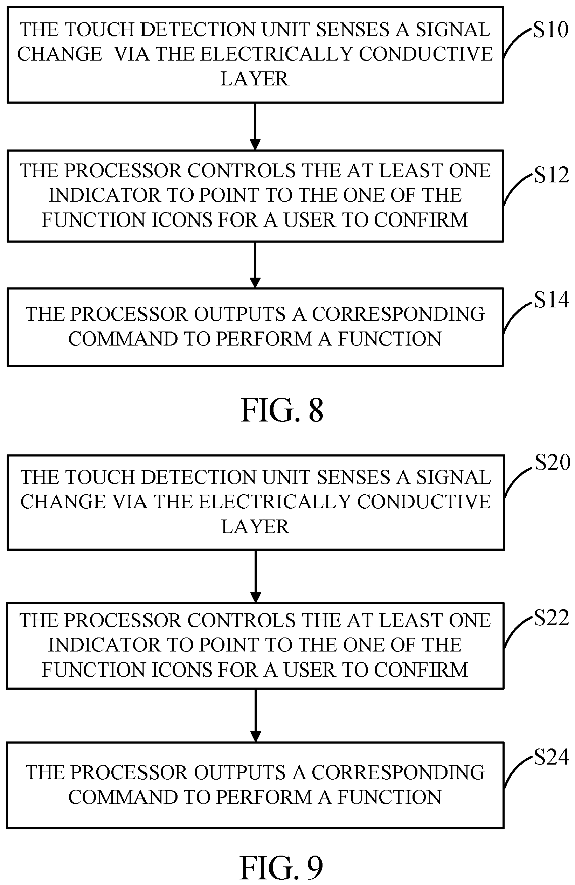

Please refer to FIG. 8. FIG. 8 shows a flowchart of an operating method of a function selection device in accordance with an embodiment of the present disclosure.

The function selection device includes a top cover, a function selection interface, a housing, a bottom cover, a display module, and a functional module. The function selection interface is disposed on and adhered to a lower surface of the top cover and includes a plurality of function icons and an electrically conductive layer. The electrically conductive layer includes a plurality of electrically conductive materials which are disconnected from each other (electrically disconnected from each other). The electrically conductive materials are formed on upper surfaces of the function icons or lower surfaces of the function icons. The top cover, the housing, and the bottom cover construct an accommodating space from top to bottom. The display module is disposed in the accommodating space. The display module includes a dial, physical scales disposed on the dial, and at least one indicator disposed on the physical scales. The functional module is disposed in the accommodating space and includes a touch detection unit and a processor. The operating method of the function selection device includes the following operations.

In operation S10, the touch detection unit senses a signal change generated by an action performed on or above the top cover via the electrically conductive layer included in the function selection interface. The signal change is generated by the action performed on or above the top cover, and a position of the action corresponds to one of the function icons.

In operation S12, the processor controls the at least one indicator to point to the one of the function icons for a user to confirm. Operation S12 is optional.

In operation S14, the processor outputs, according to the signal change, a corresponding command to perform a function corresponding to the one of the function icons.

Please refer to FIG. 9. FIG. 9 shows a flowchart of an operating method of a function selection device in accordance with another embodiment of the present disclosure.

The function selection device includes a top cover, a function selection interface, a housing, a bottom cover, a display module, and a functional module. The function selection interface is disposed to surround an outer edge of the top cover and includes a plurality of function icons, a dielectric material layer, and an electrically conductive layer. The function icons are formed on an upper surface of the dielectric material layer. The electrically conductive layer is formed on a lower surface of the dielectric material layer. The top cover, the housing, and the bottom cover construct an accommodating space from top to bottom. The display module is disposed in the accommodating space. The display module includes a dial, physical scales disposed on the dial, and at least one indicator disposed on the physical scales. The functional module is disposed in the accommodating space and includes a touch detection unit and a processor. The operating method of the function selection device includes the following operations.

In operation S20, the touch detection unit senses a signal change generated by an action performed on or above the function selection interface via the electrically conductive layer included in the function selection interface. The signal change is generated by the action performed on or above the top cover, and a position of the action corresponds to one of the function icons.

In operation S22, the processor controls the at least one indicator to point to the one of the function icons for a user to confirm. Operation S22 is optional.

In operation S24, the processor outputs, according to the signal change, a corresponding command to perform a function corresponding to the one of the function icons.

The following descriptions may be applied to the embodiments of FIG. 8 and FIG. 9.

The above-mentioned function icons correspond to various functions. For example, one function corresponding to one of the function icons is that the at least one indicator can be switched from a mode for displaying a local time to a mode for displaying times of two places (including a local time and a hometown time).

In another embodiment, one function corresponding to one of the function icons is that the at least one indicator can be switched from a mode for displaying a time to a timer mode, so that the at least one indicator starts to function as a timer after a command is received.

In yet another embodiment, one function corresponding to one of the function icons is that the at least one indicator can be switched from a mode for displaying a time to a mode for indicating at least one of a date and which day in a week. The at least one indicator includes an hour hand, a minute hand, and a second hand. After the at least one indicator is switched from the mode for displaying a time to the mode for indicating at least one of a date and which day in a week, the hour hand indicates a tens digit of a date, the minute hand indicates a units digit of the date, and the second hand indicates which day in a week.

In yet another embodiment, one function corresponding to one of the function icons is that the processor controls a mobile phone (an external device, e.g., the mobile terminal 40 in FIG. 4) to dial a phone or answer a phone via a wireless communication unit.

In yet another embodiment, one function corresponding to one of the function icons is that the processor controls, via the wireless communication unit, a mobile phone (an external device, e.g., the mobile terminal 40 in FIG. 4) to perform a function of sending an emergency notification or a function of sending a positioning request.

In yet another embodiment, one function corresponding to one of the function icons is that the processor performs a function for correcting a time.

In yet another function, the processor performs a function for comparing a current time with another time.

In the function selection device and the operating method thereof, since various functions are provided for a user to select and switch, the function selection device can display other information besides a time and perform various function.

## Claims

1. A function selection device, **characterized by** comprising:
a top cover (10);
a function selection interface (50) disposed on a lower surface of the top cover (10) and comprising a plurality of function icons (52) and an electrically conductive layer (12), wherein the electrically conductive layer (12) comprises a plurality of electrically conductive materials (120) which are disconnected from each other, and the electrically conductive materials (120) are formed on upper surfaces of the function icons (52) or lower surfaces of the function icons (52);
a housing (20);
a bottom cover (26), the top cover (10), the housing (20), and the bottom cover (26) constructing an accommodating space (28) from top to bottom;
a display module (14) disposed in the accommodating space (28), the display module (14) comprising a dial (140), physical scales (142) disposed on the dial (140), and at least one indicator (144) disposed on the physical scales (142); and
a functional module (18) disposed in the accommodating space (28), the functional module (18) comprising:
a touch detection unit (1826) configured to sense a signal change via the electrically conductive layer (12) of the function selection interface (50), wherein the signal change is generated by the action performed on or above the top cover (10), and a position of the action corresponds to one of the function icons (52); and
a processor (1820) configured to output, according to the signal change, a corresponding command to perform a function corresponding to the one of the function icons (52).

2. The function selection device according to claim 1, **characterized in that** positions of the function icons (52) correspond to an edge area of the lower surface of the top cover (10).

3. The function selection device according to claim 1, **characterized in that** before the processor (1820) outputs the corresponding command to perform the function corresponding to the one of the function icons (52), the at least one indicator (144) is controlled to point to the one of the function icons (52) by the processor (1820).

4. The function selection device according to claim 1, **characterized in that** one function corresponding to one of the function icons (52) is that the at least one indicator (144) is switched from a mode for displaying a local time to a mode for displaying times of two places.

5. The function selection device according to claim 1, **characterized in that** one function corresponding to one of the function icons (52) is that the at least one indicator (144) is switched from a mode for displaying a time to a timer mode, so that the at least one indicator (144) starts to function as a timer after a command is received.

6. The function selection device according to claim 1, **characterized in that** one function corresponding to one of the function icons (52) is that the at least one indicator (144) is switched from a mode for displaying a time to a mode for indicating at least one of a date and which day in a week, the at least one indicator (144) comprises an hour hand, a minute hand, and a second hand, the hour hand indicates a tens digit of a date, the minute hand indicates a units digit of the date, and the second hand indicates which day in a week.

7. The function selection device according to claim 1, **characterized in that** one function corresponding to one of the function icons (52) is that the processor (1820) controls an external device to dial a phone or answer a phone.

8. The function selection device according to claim 1, **characterized in that** one function corresponding to one of the function icons (52) is that the processor (1820) controls an external device to perform a function of sending an emergency notification or a function of sending a positioning request.

9. The function selection device according to claim 1, **characterized in that** one function corresponding to one of the function icons (52) is that the processor (1820) performs a function for correcting a time or performs a function for comparing a current time with another time.

10. A function selection device, **characterized by** comprising:
a top cover (10);
a function selection interface (50) disposed to surround an outer edge of the top cover (10) and comprising a plurality of function icons (52), a dielectric material layer (54), and an electrically conductive layer (12), wherein the function icons (52) are formed on an upper surface of the dielectric material layer (54), and the electrically conductive layer (12) is formed on a lower surface of the dielectric material layer (54);
a housing (20);
a bottom cover (26), the top cover (10), the housing (20), and the bottom cover (26) constructing an accommodating space (28) from top to bottom;
a display module (14) disposed in the accommodating space (28), the display module (14) comprising a dial (140), physical scales (142) disposed on the dial (140), and at least one indicator (144) disposed on the physical scales (142); and
a functional module (18) disposed in the accommodating space (28), the functional module (18) comprising:
a touch detection unit (1826) configured to sense a signal change via the electrically conductive layer (12) of the function selection interface (50), wherein the signal change is generated by the action performed on or above the function selection interface (50), and a position of the action corresponds to one of the function icons (52); and
a processor (1820) configured to output, according to the signal change, a corresponding command to perform a function corresponding to the one of the function icons (52).

11. The function selection device according to claim 10, **characterized in that** before the processor (1820) outputs the corresponding command to perform the function corresponding to the one of the function icons (52), the at least one indicator (144) is controlled to point to the one of the function icons (52) by the processor (1820).

12. The function selection device according to claim 10, **characterized in that** one function corresponding to one of the function icons (52) is that the at least one indicator (144) is switched from a mode for displaying a local time to a mode for displaying times of two places.

13. The function selection device according to claim 10, **characterized in that** one function corresponding to one of the function icons (52) is that the at least one indicator (144) is switched from a mode for displaying a time to a timer mode, so that the at least one indicator (144) starts to function as a timer after a command is received.

14. The function selection device according to claim 10, **characterized in that** one function corresponding to one of the function icons (52) is that the at least one indicator (144) is switched from a mode for displaying a time to a mode for indicating at least one of a date and which day in a week, the at least one indicator (144) comprises an hour hand, a minute hand, and a second hand, the hour hand indicates a tens digit of a date, the minute hand indicates a units digit of the date, and the second hand indicates which day in a week.

15. The function selection device according to claim 10, **characterized in that** one function corresponding to one of the function icons (52) is that the processor (1820) controls an external device to dial a phone or answer a phone.

16. The function selection device according to claim 10, **characterized in that** one function corresponding to one of the function icons (52) is that the processor (1820) controls an external device to perform a function of sending an emergency notification or a function of sending a positioning request.

17. The function selection device according to claim 10, **characterized in that** one function corresponding to one of the function icons (52) is that the processor (1820) performs a function for correcting a time or performs a function for comparing a current time with another time.

18. An operating method of a function selection device, the function selection device comprising a top cover (10), a function selection interface (50), a housing (20), a bottom cover (26), a display module (14), and a functional module (18), the function selection interface (50) disposed on a lower surface of the top cover (10) and comprising a plurality of function icons (52) and an electrically conductive layer (12), the electrically conductive layer (12) comprising a plurality of electrically conductive materials (120) which are disconnected from each other, the electrically conductive materials (120) formed on upper surfaces of the function icons (52) or lower surfaces of the function icons (52), the top cover (10), the housing (20), and the bottom cover (26) constructing an accommodating space (28) from top to bottom, the display module (14) disposed in the accommodating space (28) and comprising a dial (140), physical scales (142) disposed on the dial (140), and at least one indicator (144) disposed on the physical scales (142), the functional module (18) disposed in the accommodating space (28) and comprising a touch detection unit (1826) and a processor (1820), **characterized in that** the operating method of the function selection device comprises:
sensing a signal change by the touch detection unit (1826) via the electrically conductive layer (12) included in the function selection interface (50), wherein the signal change is generated by an action performed on or above the top cover (10), and a position of the action corresponds to one of the function icons (52); and
outputting, according to the signal change, a corresponding command to perform a function corresponding to the one of the function icons (52) by the processor (1820).

19. The operating method of the function selection device according to claim 18, **characterized in that** before outputting, according to the signal change, the corresponding command to perform the function corresponding to the one of the function icons (52) by the processor (1820), the operating method of the function selection device further comprising:
controlling the at least one indicator (144) to point to the one of the function icons (52) by the processor (1820).

20. An operating method of a function selection device, the function selection device comprising a top cover (10), a function selection interface (50), a housing (20), a bottom cover (26), a display module (14), and a functional module (18), the function selection interface (50) disposed to surround an outer edge of the top cover (10) and comprising a plurality of function icons (52), a dielectric material layer (54), and an electrically conductive layer (12), the function icons (52) formed on an upper surface of the dielectric material layer (54), the electrically conductive layer (12) formed on a lower surface of the dielectric material layer (54), the top cover (10), the housing (20), and the bottom cover (26) constructing an accommodating space (28) from top to bottom, the display module (14) disposed in the accommodating space (28) and comprising a dial (140), physical scales (142) disposed on the dial (140), and at least one indicator (144) disposed on the physical scales (142), the functional module (18) disposed in the accommodating space (28) and comprising a touch detection unit (1826) and a processor (1820), **characterized in that** the operating method of the function selection device comprises:
sensing a signal change by the touch detection unit (1826) via the electrically conductive layer (12) included in the function selection interface (50), wherein the signal change is generated by an action performed on or above the function selection interface (50), and a position of the action corresponds to one of the function icons (52); and
outputting, according to the signal change, a corresponding command to perform a function corresponding to the one of the function icons (52) by the processor (1820).

21. The operating method of the function selection device according to claim 20, **characterized in that** before outputting, according to the signal change, the corresponding command to perform the function corresponding to the one of the function icons (52) by the processor (1820), the operating method of the function selection device further comprising:
controlling the at least one indicator (144) to point to the one of the function icons (52) by the processor (1820).
